# EUROPÄISCHE PATENTSCHRIFT

(11) **EP 1 080 282 B1**
(45) Veröffentlichungstag und Bekanntmachung des Hinweises auf die Patenterteilung: **29.01.2003**
(21) Anmeldenummer: 99920440.7
(22) Anmeldetag: 06.05.1999
(51) Int. Cl.: E04F 13/14

(54) **FLIESE**
TILE
CARREAU DE CERAMIQUE

(30) Priorität: 07.05.1998 AT 76398
(43) Veröffentlichungstag der Anmeldung: 07.03.2001
(73) Patentinhaber: Lindenberg Glass Tile GmbH, 9133 Miklauzhof (AT)
(72) Erfinder: SETTEN, Heimo, A-9500 Villach (AT); KOWALCZYK, Johann, A-9524 St. Magdalen (AT)
(74) Vertreter: Babeluk, Michael, Dipl.-Ing. Mag.
(86) Internationale Anmeldenummer: AT9900111
(87) Internationale Veröffentlichungsnummer: WO99058786

(56) Entgegenhaltungen:
- BE-A- 392 170
- DE-A- 19 729 772
- DE-B- 2 636 623
- FR-A- 1 208 133
- FR-A- 2 112 115
- US-A- 1 989 634

## Beschreibung

Die vorliegende Erfindung betrifft eine Fliese gemäß dem Oberbegriff von Anspruch 1.

Zur Verkleidung von Wänden oder Böden von Gebäuden ist seit langer Zeit die Verwendung von keramischen Fliesen bekannt. Wesentliche Eigenschaften solcher Fliesen sind die einfache Verlegbarkeit mit Hilfe von Klebemörtel und die harte und wasserundurchlässige Oberfläche, die diese Fliesen bieten. Weiters sind verflieste Flächen durch entsprechende Farbgebung und Mustergestaltung der Fliesen in ästhetisch ansprechender Weise gestaltbar.

Weiters ist es bekannt, Fliesen aus gefärbtem undurchsichtigen Glas herzustellen, wobei solche Fliesen beispielsweise in Mosaiken verwendet werden.

Bei keramischen Fliesen ist es aufgrund ihres inneren Aufbaus naturgemäß so, dass sich die entsprechende Farbschicht durch den Aufbau der Glasur ergibt. Die Farbwirkung ist daher stets oberflächig. Auch bei durchgefärbten Glasfliesen ist nur eine oberflächige Farbwirkung zu beobachten, da Lichtstrahlen nicht nennenswert ins Innere der Glasschicht eindringen können. Ein weiterer Nachteil von herkömmlichen Glasfliesen besteht darin, dass diese mit den beim Fliesenlegen üblicherweise vorhandenen Mitteln nicht bearbeitet werden können. Solche Glasfliesen eignen sich daher hauptsächlich für die Anwendung in Mosaiken, da hier eine Bearbeitung der einzelnen Fliesen im allgemeinen nicht erforderlich ist. Bei der Verfliesung von Flächen mit Fliesen in einem herkömmlichen Format, etwa 20 x 30 cm, muss jedoch eine Vielzahl von Fliesen in ihrer Form bearbeitet werden, um die Verfliesung an Raumecken, Türen, Fenster, Schalter, Armaturen u. dgl. anzupassen. Da eine Mehrzahl von Fliesenlegern nicht über die Werkzeuge und Kenntnisse von Fachleuten für die Glasverarbeitung verfügt, ist eine Verfliesung mit Glasfliesen in kommerziellem Umfang bisher nicht möglich gewesen.

Die AT 304 033 B betrifft Scheiben, Platten, Ziegeln, Mosaiksteine aus durchsichtigem Glas, wobei auf der Rückseite eine Schicht aus natürlichem oder künstlichem Fischsilber angeordnet ist. Auf diese Weise ist es möglich, neuartige optische und ästhetische Effekte zu erzielen, wenn man solche Platten beispielsweise als Mosaiksteine verlegt. Eine fliesenmäßige Verarbeitbarkeit ist jedoch aufgrund des Struktur des Glases in keinem Fall gegeben.

Weiters zeigt die GB 2 271 529 A eine Glasfliese, die an ihrer Rückseite bedruckt ist, darauf eine Klebstoffschicht aufweist und letztlich eine Schicht aus Magnesiumoxyd besitzt. Eine solche Glasfliese besitzt einen mehrschichtigen sehr komplexen Aufbau, so dass die Herstellung aufwendig und kostenintensiv ist. Außerdem ist auch eine solche Fliese aufgrund der vorgegebenen Eigenschaften von Glas nicht fliesenmäßig behandelbar, d. h., dass das Herstellen von Ausnehmungen oder das Zuschneiden der Fliese äußerst aufwendig ist.

Die GB 1 011 633 A beschreibt ein Verfahren zur Herstellung von Fliesen oder dgl. bei denen die Fliesen mit einer Emailschicht überzogen werden. Auf diese Weise ist es jedoch nicht möglich, Fliesen zu erzielen, deren optische Wirkung von der Glasschicht selbst beeinflusst wird.

Aufgabe der vorliegenden Erfindung ist es, eine Fliese zu schaffen, die sich in einem optischen Erscheinungsbild deutlich von herkömmlichen Fliesen unterscheidet und die grundsätzlich wie eine keramische Fliese verarbeitbar ist.

Erfindungsgemäß werden diese Aufgaben durch die Merkmale von Patentanspruch 1 gelöst.

Durch die Wärmebehandlung der Glasschicht wird erreicht, dass eine Gefügeveränderung auftritt, die ein gezieltes Brechen des Glases im Zuge einer Bearbeitung ermöglicht. Bei der Verlegung von Fliesen treten allgemein zwei unterschiedliche Bearbeitungsvorgänge auf: Bei einem ersten Bearbeitungsvorgang ist eine Fliese entlang einer geraden Linie zu teilen, was üblicherweise dadurch erfolgt, dass die Fliese mit einem aus Hartmetall bestehenden Schneidrad an der Teilungslinie geritzt wird und dann entsprechend gebrochen wird. Die andere Art von Bearbeitungsvorgängen ist erforderlich, wenn in eine Fliese eine Ausnehmung, etwa für einen Schalter, eine Steckdose oder einen Sanitäranschluss eingearbeitet werden muss. In solchen Fällen erfolgt vielfach das Ausbrechen der Ausnehmung mit entsprechend geformten Zangen (Kröselzangen) oder mit wassergekühlten Diamanttrennscheiben. Mit der erfindungsgemäßen Fliese sind beide Typen von Bearbeitungsvorgängen im wesentlichen in analoger Weise zu keramischen Fliesen durchführbar. Daher kann die erfindungsgemäße Fliese ohne besondere Maßnahmen von Fliesenlegern verarbeitet werden. Lediglich das Herstellen genauer Bohrungen ist bei erfindungsgemäßen Fliesen etwas aufwendiger als bei keramischen Fliesen.

Ein weiterer wesentlicher Punkt der Erfindung ist, dass die Lackschicht durch den beim Fliesenlegen verwendeten Klebemörtel nicht angegriffen wird. Dies bedeutet, dass bei der Verlegung der Fliese keine chemische Reaktion der Lackschicht mit dem stark alkalischen Klebemörtel auftritt, die etwa zu einer Farbveränderung führt, oder die eine Ablösung der Lackschicht von der Glasschicht bewirkt. Darüber hinaus ist die Lackschicht durch eine Trocknungsbehandlung aufgeraut. Dies bedeutet, dass die Farbschicht selbst eine mikroskopische Rauigkeit an ihrer äußeren Oberfläche aufweist. Im Gegensatz zu der optionalen Strukturierung der Glasoberfläche, die in einer Größenordnung von Millimetern liegt, hat diese Rauigkeit kaum eine optische Auswirkung auf das Erscheinungsbild der verlegten Fliese. Es wird jedoch die Haftung von Klebemörtel o. dgl. wesentlich verbessert, so dass eine sichere Verlegung gewährleistet ist.

Die erfindungsgemäße Fliese ermöglicht es, ein von herkömmlichen Fliesen völlig unterschiedliches Erscheinungsbild zu verwirklichen. Da sich die Farbstruktur, die das Muster der Fliese bildet, hinter einer transparenten Glasschicht befindet, wird ein räumlich wirkendes Erscheinungsbild der Fliese verursacht. Durch verschiedene Brechungseffekte u. dgl. werden Wirkungen erzielt, die bei herkömmlichen Fliesen nicht zu beobachten sind.

An sich ist es möglich, zur Ausbildung der Farbschicht einen Zweikomponentenlack zu verwenden. Insbesonders käme ein Zweikomponenten-Acryllack, wie er speziell für die Ganz- und Teillackierung von Nutzfahrzeugen, Tankfahrzeugen, Bussen u. dgl. entwickelt worden ist, dafür in Frage. Wichtig im Sinn der Erfindung sind die hohe mechanische und chemische Belastbarkeit und die dauerhafte Glanzhaltung sowie die Beständigkeit gegen Benzin, Fette und andere Lösungsmittel. Mineralische Lacke erfüllen diese Bedingungen in hervorragender Weise. Dabei handelt es sich vorzugsweise um Emaillacke, d.h. um mit Farbpigmenten versehenen Glasstaub, der zum Auftrag mittels Siebdruck pastös zubereitet ist.

Die räumliche Strukturwirkung der erfindungsgemäßen Fliese kann weiter dadurch verbessert werden, dass die Oberflächen der Glasschicht nicht glatt ausgebildet sind. Eine Strukturierung der Oberflächen, d. h. eine wellige Ausbildung, ermöglicht die Erzielung von ästhetisch besonders interessanten Effekten.

Zusätzlich zu der auf der Rückseite der Glasschicht angebrachten Farbschicht kann die Glasschicht auch noch eine innere Farbstruktur aufweisen. Dies bedeutet, dass das Glas durchgängig oder an bestimmten Stellen eingefärbt ist. Es muss dabei jedoch sichergestellt werden, dass das Glas zumindest bereichsweise transparent ist, um die oben beschriebenen Wirkungen erzielen zu können.

Weiters betrifft die Erfindung ein Verfahren zur Herstellung einer Fliese, bestehend aus den Schritten gemäß Patentanspruch 5.

Vorzugsweise sollte bei der Wärmebehandlung der Erweichungspunkt des Glases überschritten werden. Dies wird allgemein dadurch erreicht, dass die Erwärmung auf eine Maximaltemperatur in einem Bereich von 750° bis 850° erfolgt. Beim Abkühlen ist es günstig, mehrere Haltepunkte vorzusehen, um eine möglichst günstige Glasstruktur zu erzielen. In einer besonders begünstigten Ausführungsvariante des erfindungsgemäßen Verfahrens ist vorgesehen, dass die Wärmebehandlung erfolgt während der Abschnitt liegend auf einem Formsandbett gelagert ist, wobei eine besondere räumliche Wirkung dadurch erzielt werden kann, wenn das Asbestsandbett vor dem Auflegen des Abschnitts strukturiert wird, indem beispielsweise durch eine Stempel oder eine Walze ein Muster in das Sandbett eingedrückt wird.

Üblicherweise wird die Wärmebehandlung so durchgeführt, dass die zu behandelnden Glasplatten in den kalten Ofen eingelegt werden. Dieser Ofen wird dann auf die Maximaltemperatur gebracht, die von der Glassorte und der Dicke des Materials abhängt. Wesentlich an der Wärmebehandlung ist die Abkühlphase, bei der verschiedene Haltepunkte vorzusehen sind. Durch das Vorsehen dieser Haltepunkte kann erreicht werden, dass die fertige Glasfliese weitgehend spannungsfrei ist, was für die weitere Verarbeitung und die Haltbarkeit wesentlich ist. In dem folgenden Ausführungsbeispiel wird anhand einer 8 mm dicken Glasfliese ein typischer Verfahrensablauf für die Wärmebehandlung dargestellt:

| Phase | Anfangstemperatur | Haltetemperatur | Endtemperatur | Zeitdauer |
|---|---|---|---|---|
| 1 | 18°C | | 250°C | 30 min |
| 2 | | 250°C | | 10 min |
| 3 | 250°C | | 750°C | 90 min |
| 4 | | 750°C | | 10 min |
| 5 | 750°C | | 785°C | 18 min |
| 6 | | 785°C | | 20 min |
| 7 | 785°C | | 520°C | schnell |
| 8 | | 520°C | | 50 min |
| 9 | 520°C | | 485°C | 40 min |
| 10 | | 485°C | | 40 min |
| 11 | 485°C | | 320°C | 120 min |
| 12 | 320°C | | 18°C | 300 min |

Nach der Wärmebehandlung wird der Abschnitt auf Raumtemperatur abgekühlt und beispielsweise in einem Siebdruckverfahren mit einem Emaillack bedruckt. Unmittelbar nach dem Druckvorgang wird die Fliese in einem Infrarot-Tunnelofen bei einer Temperatur von etwa 180°C getrocknet. Die Verweilzeit beträgt etwa 30 Sekunden. Durch die sofortige Wärmeeinwirkung wird eine rasche Dehydrierung des Lacks bewirkt, wodurch die Lackoberfläche in mikroskopischem Maßstab aufgeraut wird. Wenn mehrere Farbschichten auf die Fliese aufgetragen werden, erfolgt die Trocknungsbehandlung jeweils unmittelbar nach dem Auftrag jeder Farbschicht. Nach dem Auftrag der letzten Farbschicht und der daran anschließenden Trocknung wird auf die Fliese eine Deckschicht aufgebracht, und danach wird ein Einbrennvorgang bei einer Temperatur von etwa 580°C bis etwa 620°C durchgeführt. Diese Temperatur wird etwa 20 Minuten gehalten. Die Deckschicht ist bei hellen Fliesen zumeist weiß, ansonsten schwarz und soll das Durchscheinen des Untergrundes nach dem Verlegen verhindern. Durch das Einbrennen werden die Farben endgültig fixiert. Wichtig ist das langsame Abkühlen der Fliese im geschlossenen Ofen nach dem Einbrennen über einen Zeitraum von etwa 3 bis 4 Stunden oder mehr. Dadurch kann eine unerwünschte Härtung des Glases vermieden werden. Die aufgeraute Struktur bleibt bei dieser Behandlung erhalten, so dass der hervorragende Halt bei der Verarbeitung gegeben ist.

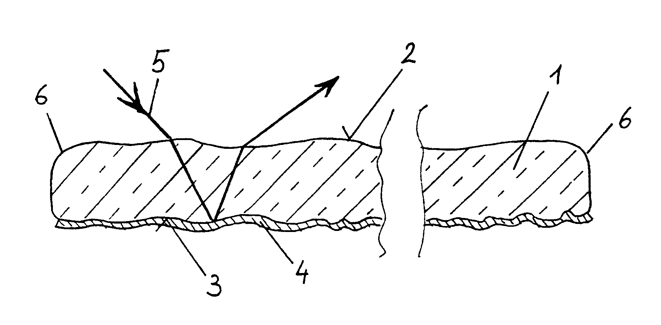

In der Folge wird die Erfindung anhand eines in der Figur dargestellten Ausführungsbeispiels näher erläutert.

In der Figur ist schematisch eine erfindungsgemäße Fliese in einem Schnitt dargestellt. Um das Verständnis der Erfindung zu erleichtern, ist dabei keine Deckschicht dargestellt.

Die Fliese besteht aus einer Glasschicht 1, die eine Sichtseite 2 und eine Rückseite 3 aufweist. An der Rückseite 3 ist eine Farbschicht 4 aus einem Zweikomponentenlack aufgebracht. Es handelt sich dabei beispielsweise um eine Bauglasfarbe 13 710 von CERDEC Chemische Farben in Frankfurt, DE, mit den Hauptbestandteilen Pb, Si, Cd, Li, Na, Ti, B, Al. Es sind auch Lacke möglich, deren Farbkomponenten aus pigmentiertem Glasstaub bestehen. Es ist ersichtlich, dass sowohl die Sichtseite 2 als auch die Rückseite 3 nicht völlig eben sind, sondern eine wellige Struktur besitzen. Die optische Wirkung der Fliese ergibt sich dadurch, dass die einfallenden Lichtstrahlen 5 an der Sichtfläche 2 gebrochen werden, die Farbschicht 4 erreichen, reflektiert werden und wiederum an der Sichtfläche 2 austreten. Durch die unebene Beschaffenheit der Oberflächen 2 und 3 erfolgt die Brechung und die Reflexion an den einzelnen Stellen der Fliese unterschiedlich. Auf diese Weise wird eine besondere optische Wirkung erzielt. Weiters ist aus der Fig. ersichtlich, dass durch die Wärmebehandlung aufgrund der Oberflächenspannung der Fliese die Kanten 6 nicht scharfkantig sondern abgerundet sind. Dies ist eine für Fliesen allgemein erwünschte Tatsache.

Es ist für den Fachmann ohne weiteres ersichtlich, dass die Glasschicht 1 auch aus mehreren gleichen oder unterschiedlichen Glasschichten zusammengesetzt sein kann, die teilweise oder völlig miteinander verschmolzen sind.

Mit der vorliegenden Erfindung wird es in kommerziellem Maßstab möglich, aus Glas hergestellte Fliesen in großem Umfang in einer Art wie keramische Fliesen einzusetzen.

## Patentansprüche

1. Fliese zur Verlegung mit Klebemörtel an Wänden, Böden od. dgl., bestehend aus einer transparenten Glasschicht (1) und einer auf der Rückseite der Glasschicht aufgebrachten Farbschicht (4), wobei die Farbschicht (4) die Rückseite der Fliese bildet, **dadurch gekennzeichnet, dass** die Glasschicht (1) als Ganzes einer bis zur Erweichung führenden Wärmebehandlung unterzogen worden ist, wobei die Farbschicht (4) aus einem mineralischen Lack besteht, der in die Glasschicht (1) eingebrannt ist und die Farbschicht durch eine Trocknungsbehandlung aufgeraut ist, sowie dass auf die Farbschicht (4) eine bei hellen Fliesen zumeist weiße, ansonsten schwarze Deckschicht aufgebracht ist, welche das Durchscheinen des Untergrundes nach dem Verlegen verhindert, wobei die aufgeraute Struktur erhalten bleibt.

2. Fliese nach Anspruch 1, **dadurch gekennzeichnet, dass** der Lack ein Emaillack ist.

3. Fliese nach einem der Ansprüche 1 oder 2, **dadurch gekennzeichnet, dass** die Oberfläche des Glases strukturiert ist.

4. Fliese nach einem der Ansprüche 1 bis 3, **dadurch gekennzeichnet, dass** die Rückseite der Glasschicht (1) strukturiert ist.

5. Verfahren zur Herstellung einer Fliese, bestehend aus folgenden Schritten:
- Schneiden einer Glasplatte auf einen Abschnitt in der gewünschten Form der Fliese,
- Wärmebehandeln des Abschnitts bis zur Erweichung,
- Abkühlung des Abschnitts auf eine Temperatur im Bereich der Raumtemperatur, wobei mindestens ein Haltepunkt eingehalten wird,
- Aufbringen einer mineralischen Lackschicht auf eine Seite des Abschnitts,
- Durchführen einer Trocknungsbehandlung unmittelbar nach dem Aufbringen der Lackschicht zum Aufrauen der Lackschicht,
- Aufbringen einer bei hellen Fliesen zumeist weißen, ansonsten schwarzen Deckschicht auf die Lackschicht, um das Durchscheinen des Untergrundes nach dem Verlegen zu verhindern,
- Einbrennen der Lackschicht bei einer Temperatur unterhalb der Maximaltemperatur der Wärmebehandlung, wobei die aufgeraute Struktur erhalten bleibt.

6. Verfahren nach Anspruch 5, **dadurch gekennzeichnet, dass** die Wärmebehandlung ein Erwärmen des Abschnitts auf eine Temperatur über dem Erweichungspunkt und ein darauf anschließendes Abkühlen mit einem oder mehreren Haltepunkten umfasst.

7. Verfahren nach Anspruch 6, **dadurch gekennzeichnet, dass** die Erwärmung in an sich bekannter Weise auf eine Maximaltemperatur in einem Bereich von 750° bis 850° erfolgt, wobei die Maximaltemperatur oberhalb der Erweichungstemperatur des Glases liegt.

8. Verfahren nach einem der Ansprüche 5 bis 7, **dadurch gekennzeichnet, dass** die Wärmebehandlung erfolgt, während der Abschnitt liegend auf einem Formsandbett gelagert ist.

9. Verfahren nach Anspruch 8, **dadurch gekennzeichnet, dass** das Formsandbett vor dem Auflegen des Abschnitts strukturiert wird.

10. Verfahren nach einem der Ansprüche 5 bis 9, **dadurch gekennzeichnet, dass** die Fliese unmittelbar nach dem Aufbringen der Lackschicht auf eine Temperatur von mehr als 60°C, vorzugsweise auf eine Temperatur zwischen 150°C und 200°C erwärmt wird.

11. Verfahren nach einem der Ansprüche 5 bis 9, **dadurch gekennzeichnet, dass** nach dem Aufbringen der Lackschicht und der Deckschicht ein Einbrennvorgang bei einer Temperatur von etwa 560°C bis etwa 660°C, vorzugsweise von etwa 580°C bis etwa 620°C, durchgeführt wird.

12. Verfahren nach Anspruch 11, **dadurch gekennzeichnet, dass** die Fliese nach dem Einbrennvorgang im geschlossenen Ofen mindestens drei Stunden abkühlen gelassen wird.

## Claims

1. Tile for covering walls, floors or the like using adhesive mortar with a transparent glass layer (1) and a coloured layer (4) which is applied to the rear side of the glass layer (1) wherein the coloured layer (4) constitutes the rear side of the tile, **characterized in that** the glass layer (1) is submitted to a heat treatment until it softens and that the coloured layer (4) consists of a mineral lacquer which is burned into the glass layer (1) and that the coloured layer (4) is roughened by a heat treatment and that a protective coating being generally white on light tiles otherwise black is applied to the coloured layer and serves to prevent the supporting layer from shining through after tiling, wherein the roughened structure is maintained.

2. Tile according to claim 1, **characterized in that** the lacquer is an enamel varnish.

3. Tile according to one of the claims 1 or 2, **characterized in that** the surface of the glass is structured.

4. Tile according to one of the claims 1 through 3, **characterized in that** the rear side of the glass layer (1) is structured.

5. Method for manufacturing a tile consisting of the following steps:
- cutting of a glass pane to produce a section of a desired shape of the tile,
- heat treatment of the section until it softens,
- cooling of the section to a temperature in the range of room temperature, providing at least one arrest point
- application of a coat of mineral lacquer to one side of the section,
- conducting a heat treatment immediately after applying the coat of lacquer for roughening the coat of lacquer,
- application of a protective coating being generally white on light tiles otherwise black to the coat of lacquer, for preventing the supporting layer from shining through after tiling,
- firing of the coat of lacquer at a temperature which is lower than the maximum temperature of the heat treatment, and maintaining the roughened structure.

6. Method according to claim 5, **characterized in that** heat treatment includes heating the section to a temperature above the softening point and subsequent cooling with one or several arrest points.

7. Method according to claim 6, **characterized in that** heating is conducted in a known way to a maximum temperature ranging from 750° to 850°, the maximum temperature being above the softening temperature of glass.

8. Method according to one of the claims 5 through 7, **characterized in that** heat treatment is performed with the section lying on a bed of moulding sand.

9. Method according to claim 8, **characterized in that** the bed of moulding sand is structured prior to placing the section there onto.

10. Method according to one of the claims 5 through 8, **characterized in that,** immediately upon application of the coat of lacquer, the tile is heated to a temperature above 60°C, preferably to a temperature between 150°C and 200°C.

11. Method according to one of the claims 5 through 8, **characterized in that,** upon application of the coat of lacquer and the protective coating a firing operation is carried out at a temperature of about 560°C up to approximately 660°C, preferably from about 580°C to approximately 620°C.

12. Method according to claim 11, **characterized in that** the tile is left to cool down in the closed furnace over a period of at least 3 hours once firing is over.

## Revendications

1. Carreau pour être fixé avec du mortier/colle sur des murs, sols ou autres, composé d'une couche de verre (1) transparente et d'une couche de couleur (4) appliquée sur la face arrière de la couche de verre, cette couche de couleur (4) constituant la face arrière du carreau,
**caractérisé en ce que**
la couche de verre (1) est globalement soumise à un traitement thermique conduisant à son ramollissement, la couche de couleur (4) étant un vernis minéral cuit dans la couche de verre (1) et la couche de couleur (4) est rendue rugueuse par un traitement à sec, ainsi que
sur la couche de couleur (4) est déposé un revêtement plutôt blanc pour un carreau clair ou sinon d'un revêtement noir, qui empêche de voir le fond d'infrastructure apèrs la pose mais permet de voir la structure rugueuse.

2. Carreau selon la revendication 1,
**caractérisé en ce que**
le vernis est un émail.

3. Carreau selon l'une des revendications 1 ou 2,
**caractérisé en ce que**
la surface du verre est structurée.

4. Carreau selon l'une des revendications 1 à 3,
**caractérisé en ce que**
la face arrière de la couche de verre (1) est structurée.

5. Procédé de fabrication d'un carreau comprenant les étapes suivantes :
- découpe d'une plaque de verre à la forme de pièce découpée souhaitée du carreau,
- traitement thermique de la pièce coupée jusqu'à son ramollissement,
- refroidissement de la pièce découpée à une température de l'ordre de la température ambiante, en respectant au moins une température de mainitien,
- application d'une couche de vernis minéral sur une face de la pièce découpée,
- traitement de séchage effectué directement après l'application de la couche de vernis pour rendre rugueuse cette couche,
- apport d'un revêtement plutôt blanc pour un carreau clair, sinon d'un revêtement noir, pour empêcher de voir le fond d'infrastructure après la pose,
- cuisson de la couche de vernis à une température inférieure à la température maximale du traitement thermique, la structure rugueuse restant apparente.

6. Procédé selon la revendication 5,
**caractérisé en ce que**
le traitement thermique comprend le réchauffage de la pièce découpée à une température supérieure au point de ramollissement suivi d'un refroidissement avec une ou plusieurs température de maintien.

7. Procédé selon la revendication 6,
**caractérisé en ce que**
le réchauffage se fait de manière connue en soi à une température maximale dans une plage comprise entre 750° et 850°, la température maximale étant située au-dessus de la température de ramollissement du verre.

8. Procédé selon l'une quelconque des revendications 5 à 7,
**caractérisé en ce que**
le traitement thermique se fait pendant que la pièce découpée est couchée sur un lit de sable de moulage.

9. Procédé selon la revendication 8,
**caractérisé en ce que**
le lit de sable de moulage est structuré avant d'y placer la pièce découpée.

10. Procédé selon l'une quelconque des revendications 5 à 9,
**caractérisé en ce que**
directement après l'application de la couche de vernis on chauffe le carreau à une température supérieure à 60°C, de préférence à une température comprise entre 150°C et 200°C.

11. Procédé selon l'une quelconque des revendications 5 à 9,
**caractérisé en ce qu'**
après application de la couche de vernis sur le carreau on applique une couche de revêtement et ensuite on effectue une cuisson à une température d'environ 560°C jusqu'à environ 660°C, de préférence de l'ordre de 580°C jusqu'à environ 620°C.

12. Procédé selon la revendication 11,
**caractérisé en ce qu'**
après l'opération de cuisson dans un four fermé, on laisse refroidir le carreau pendant au moins trois heures.
